# EUROPÄISCHE PATENTANMELDUNG

(11) **EP 0 704 702 A1**
(43) Veröffentlichungstag der Anmeldung: **03.04.1996**
(21) Anmeldenummer: 95114475.7
(22) Anmeldetag: 14.09.1995
(51) Int. Cl.: G01P 1/04

(54) **Drehgeber**

(30) Priorität: 15.09.1994 DE 4432933
(71) Anmelder: LITTON PRECISION PRODUCTS INTERNATIONAL, INC., D-85774 Unterföhring (DE)
(72) Erfinder: Geroldinger, Arnold, D-85774 Unterföhring (DE)
(74) Vertreter: TER MEER - MÜLLER - STEINMEISTER & PARTNER

(57) **Zusammenfassung**

Der erfindungsgemäße Drehgeber weist eine zweiteilige Rotorwelle (5, 7) auf, wobei die beiden Wellenteile durch torsionssteife Federelemente (6) verbunden sind und eine spielfreie Rotationsübertragung gewährleisten.

Gegenüber bekannten Drehgebern mit einteiliger Rotorwelle ergeben sich die Vorteile, daß hohe Temperaturen auf der Antriebsseite wesentlich besser vom Drehgeber abgehalten, mögliche Fluchtungsfehler oder Laufunrundheiten ausgeglichen werden und bei unverändertem Drehgebergrundmodell durch einfache Auswechslung der antriebsseitigen Aufnahmewelle (7) eine flexible Anpassung an Kundenwünsche ermöglicht ist.

## Beschreibung

Die Erfindung bezieht sich auf Drehgeber, insbesondere auf die konstruktive Gestaltung der Antriebswelle eines solchen Drehgebers.

Drehgeber der hier in Rede stehenden Art weisen eine im Drehgebergehäuse gelagerte, auf einer Stirnseite herausragende Welle auf, die montageseitig (kundenseitig) als Voll- oder Hohlwelle ausgeführt sein kann. Bei der Ausführung als Vollwelle wird in der Regel zusätzlich zur Antriebswelle zum Ausgleich von Fluchtungsfehlern ein flexibles Kupplungselement eingesetzt. Weiterhin wird in der Regel auf der montageseitigen Stirnflache eine Art Glocke oder Haube als starre Verbindung zwischen der anwenderseitigen Montagefläche und der eigentlichen montageseitigen Stirnfläche des Drehgebers benötigt.

Bei Drehgebern mit Hohlwelle erfolgt die Montage durch einfaches Aufstecken des Drehgebers auf die Antriebswelle des anwenderseitigen Geräts. Mögliche Fluchtungsfehler werden dadurch ausgeglichen, daß zwischen dem Drehgeber, insbesondere zwischen dessen Stator und einem Montageflansch, eine gefederte Drehmomentstütze befestigt wird. Die im wesentlichen den Rotor bildende Drehgeber-Hohlwelle ist mit der anwenderseitigen Antriebswelle durch Klemmung verbunden.

Ein erhebliches Problem, das sich aus den nur beispielhaft angeführten Arten der Montagen solcher Drehgeber ergibt, ist, daß die aus unterschiedlichen Gründen oft hohen Temperaturen der Antriebswelle direkt in den Drehgeber gelangen und der innerhalb des Drehgebergehäuses untergebrachten Auswerteelektronik hart zusetzen, weil Grenzwerte der für Halbleiterbauelemente, Kondensatoren und dergleichen zulässigen Höchsttemperaturen überschritten werden. In vielen Fällen ist ohne besondere Wärmeisolationsmaßnahmen der Einsatz von Drehgebern unmittelbar an einer Maschinenwelle unmöglich.

Bei hohen Drehzahlen kommt auf der Seite des Drehgebers bei der bevorzugten Ausführungsform mit Hohlwelle noch ein Vibrationsproblem dazu. Der Grund liegt darin, daß sich durch Fertigungstoleranzen und Laufunrundheiten der Antriebselemente, aber auch durch die Verwendung spezieller Kugellager, insbesondere Rillenkugellager, Exzentrizitäten ergeben, die den Stator des Drehgebers in Resonanz bringen können.

Aus DE-PS 330 589 ist ein Antrieb für einen Geschwindigkeitsmesser bekannt, bei welchem die Antriebswelle im Verlauf der Drehachse in zwei mit geringem Axialabstand beabstandete Abschnitte unterteilt ist, die durch zwei Blattfederelemente miteinander verbunden sind. Der eine Abschnitt der Antriebswelle ist als biegsame Bowdenwelle im wesentlichen außerhalb des Drehgebergehäuses angeordnet, während der zweite Abschnitt innerhalb des Drehgebergehäuses gelagert ist. Die Bowdenwelle ist über ein zusätzliches Lager in einer mit dem Drehgebergehäuse verbundenen Hülse gelagert. Die als Kupplung dienenden Blattfederelemente sind elastisch ausgebildet, um eine Übertragung der Torsionsschwingungen der biegsamen Welle auf den Geschwindigkeitsmesser zu vermeiden. Eine für den Betrieb von Drehgebern notwendige präzise Übertragung der Winkelbewegung der Bowden- bzw. Aufnahmewelle ist durch die elastische Ausbildung der Blattfederelemente nicht möglich. Die beschriebene Anordnung ist daher für den Einsatz bei Drehgebern ungeeignet.

In der DE-AS 21 21 102 wird eine Vorrichtung zum Verbinden eines Impulsgebers mit einer Fahrzeugachse beschrieben, bei dem eine aus einem Impulsgebergehäuse herausragende Antriebswelle mit einer Verbindungswelle gekoppelt ist, die über eine U-förmige Lasche mit einem sich drehenden Käfig eines auf der Fahrzeugachse sitzenden Planetenradgetriebes verbindbar ist.

Der Erfindung liegt damit die Aufgabe zugrunde, Drehgeber der beschriebenen Gattung so zu verbessern, daß die erwähnten Probleme einer zu starken Wärmeübertragung von der Antriebswelle in das Drehgebergehäuse einerseits und mögliche Vibrationen im oder am Drehgeber andererseits vermieden werden, während gleichzeitig eine präzise Übertragung der Drehbewegung von der Antriebswelle des anwenderseitigen Geräts zum Drehgeber sichergestellt ist.

Erfindungsgemäß ist ein Drehgeber, bei dem die Antriebswelle im Verlauf der Drehachse in zwei mit geringem Spalt beabstandete Abschnitte unterteilt ist, die durch mindestens ein Blattfederelement verbunden sind, wobei der eine Abschnitt als Aufnahmewelle im wesentlichen außerhalb des Drehgebergehäuses liegt und der zweite Abschnitt im wesentlichen innerhalb des Drehgebergehäuses gelagert ist, dadurch gekennzeichnet, daß das mindestens eine Blattfederelement torsionssteif angeordnet ist, der zweite Abschnitt als Rotorwelle ausgebildet ist, und daß die Aufnahmewelle über das Blattfederelement auf der Rotorwelle gelagert ist.

Vorzugsweise sind die beiden Antriebswellenabschnitte durch mehrere, beispielsweise zwei bis fünf, insbesondere durch drei Blattfederelemente miteinander verbunden, die montageseitig, also außerhalb der Lagerung der Rotorwelle, einerseits an einem Ansatz der Aufnahmewelle, der eine Ringschulter oder ein Flanschansatz sein kann, und andererseits an einem radial nach außen springenden Flanschansatz der Rotorwelle befestigt sind.

Das oder die Blattfederelement(e) können zusätzlich als Fächerblätter gestaltet sein, derart, daß eine zusätzliche Belüftung des Drehgebers, beispielsweise eine Belüftung der als Hohlwelle ausgeführten Rotorwelle auf der Innenseite bewirkt wird. Die Aufnahmewelle kann sowohl als Hohlwelle als auch als Vollwelle ausgeführt sein.

Der Kerngedanke der Erfindung beruht darauf, daß die gelagerte Welle (Rotorwelle) des Drehgebers in Axialrichtung geteilt ist und ein torsionssteifes Federelement eine spielfreie Rotationsübertragung gewährleistet.

Die Erfindung und vorteilhafte Einzelheiten werden nachfolgend unter Bezug auf die Zeichnung in beispielsweiser Ausführungsform näher beschrieben. Es zeigen:
- **Fig. 1**: die Schnittdarstellung eines Drehgebers mit erfindungsgemäß unterteilter Antriebs- oder Rotorwelle und
- **Fig. 2**: die Perspektivdarstellung eines Drehgebers mit erfindungsgemäßen Merkmalen.

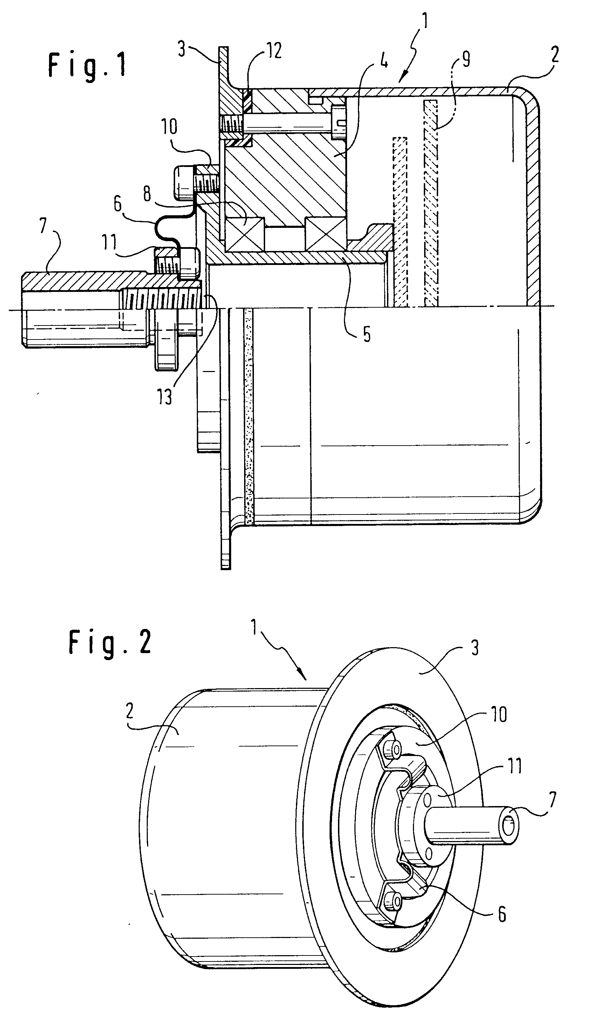

Die beiden Fig. 1 und 2 zeigen einen Drehgeber grundsätzlich bekannter Bauart mit einem topfartigen Gehäuse 2, dessen offener umlaufender Rand in die Außenumrandung eines Stators 4 eingepaßt ist, der an einem montageseitigen Flansch 3, beispielsweise mittels Verschraubung, fixiert ist, wobei, wie in Fig. 1 dargestellt, besondere Dämpfungs-, Wärme- und Vibrationsisolationsmaßnahmen 12 vorgesehen sein können. Innerhalb des Stators 4 ist die im dargestellten Beispiel als Hohlwelle ausgeführte Rotorwelle 5 durch Kugel-, Rollen- oder Nadellager 8 abgestützt. Innerhalb des Gehäuses 2 befindet sich eine nur schematisch angedeutete Schaltungsplatte 9, welche die üblichen elektronischen Steuer- und Auswertekomponenten des Drehgebers trägt.

Wie die Figuren erkennen lassen, weist die Rotorwelle 5 auf der montageseitigen Stirnfläche des Drehgebers 1 einen nach außen springenden, einstückig angesetzten Flansch 10 auf, an dem, beispielsweise mittels Schrauben, durch Punktverschweißung oder dergleichen, ein torsionssteifes Blattfederelement 6 fixiert ist, das im dargestellten Beispiel in Axialrichtung vorgewölbt ist, und dessen anderes Ende an einem schulterartigen Ansatz oder Flansch 11 einer Aufnahmewelle 7 fixiert ist. Das einerseits am Flansch 10 der Rotorwelle 5 und andererseits am Ansatz 11 der Aufnahmewelle 7 fixierte torsionssteife Blattfederelement 6 ist in Umfangsrichtung in der Regel mindestens zweifach, vorzugsweise jedoch drei- bis fünffach vorhanden, wobei zweckmäßigerweise die Blattfederelemente 6 in jeweils gleichem Winkelabstand von beispielsweise 120 ° im Falle von drei Blattfederelementen 6 verteilt angeordnet sind. Die Blattfederelemente 6 können bezüglich der Drehachse in Axial- und in Radialrichtung federn, während sie in Tangentialrichtung federsteif, also bezüglich der Drehachse des Drehgebers torsionssteif angeordnet sind.

Die gesamte Antriebswelle des Drehgebers ist demnach in zwei mit einem Spalt 13 beabstandete Abschnitte unterteilt, nämlich in die Rotorwelle 5 und in die Aufnahmewelle 7. Die Aufnahmewelle 7 kann mit einer Antriebswelle des anwenderseitigen Geräts verbunden werden und ist daher vorzugsweise als Hohlwelle ausgeführt. Sie läßt sich auf einfache Weise auswechseln und an anwenderspezifische Bedürfnisse anpassen; beispielsweise kann sie auch als Vollwelle ausgeführt sein. Durch die Befestigung der Blattfederelemente 6 an der Aufnahmewelle 7 und der Rotorwelle 5 wird die Aufnahmewelle 7 über die Blattfederelemente 6 auf der Rotorwelle 5 gelagert. Die torsionssteifen Blattfederelemente 6 bilden eine in Rotationsrichtung steife Drehverbindung zwischen der Aufnahmewelle 7 und der mit geringem Axialabstand bzw. Spalt 13 beabstandeten Rotorwelle 5 mit mehreren erheblichen Vorteilen, die weiter unten noch erläutert werden, jedoch mit dem sofort einleuchtenden Vorteil eines gewissen Axial- und Lauftoleranzausgleichs.

Ein erfindungsgemäßer Drehgeber mit unterteilter Antriebswelle weist im wesentlichen folgende Verbesserungen und Vorteile gegenüber bekannten Drehgebern mit einstückiger Rotorwelle auf:
- Hohe Temperaturen, insbesondere auf der Antriebsseite werden aufgrund des Luftspalts bzw. des Axialabstands 13 zwischen der Aufnahmewelle 7 und der Rotorwelle 5, also durch die Isolation des Rotors abgeblockt.
- Der ebenfalls isolierte Drehgeberflansch 3 mit Stator 4 ist weitgehend starr und damit vibrationsfrei mit der Montagefläche bzw. einem Motorflansch verbunden. Mögliche Fluchtungsfehler werden von dem oder den Blattfederelement(en) 6 am Rotor eliminiert.
- Die mit der anwenderseitigen Welle zu verbindende Aufnahmewelle 7 kann als Voll- oder Hohlwelle ausgeführt sein und an anwenderspezifische Wünsche angepaßt werden. Der Drehgeber als Grundmodell bleibt dabei immer der gleiche. Dadurch werden durch Typenreduzierung erhebliche Herstellungs- und Lagerkosten eingespart.

## Patentansprüche

1. Drehgeber, bei dem die Antriebswelle im Verlauf der Drehachse in zwei mit geringem Spalt (13) beabstandete Abschnitte unterteilt ist, die durch mindestens ein Blattfederelement (6) verbunden sind, wobei der eine Abschnitt als Aufnahmewelle (7) im wesentlichen außerhalb des Drehgebergehäuses (2) liegt und der zweite Abschnitt im wesentlichen innerhalb des Drehgebergehäuses gelagert ist, **dadurch gekennzeichnet, daß** das mindestens eine Blattfederelement (6) torsionssteif angeordnet ist, der zweite Abschnitt als Rotorwelle (5) ausgebildet ist, und daß die Aufnahmewelle (7) über das Blattfederelement (6) auf der Rotorwelle (5) gelagert ist.

2. Drehgeber nach Anspruch 1, **dadurch gekennzeichnet,** daß zur Verbindung der beiden Antriebswellenabschnitte (5, 7) zwei bis fünf, vorzugsweise drei Blattfederelemente (6) vorgesehen sind, die montageseitig, also außerhalb der Lagerung der Rotorwelle (5), einerseits an einem Ansatz (11) der Aufnahmewelle (7) und andererseits an einem radial nach außen springenden Flanschansatz (10) der Rotorwelle (5) befestigt sind.

3. Drehgeber nach Anspruch 1 oder 2, **dadurch gekennzeichnet,** daß das oder die Blattfederelement(e) (6) als Fächerblätter gestaltet sind, zur zusätzlichen Belüftung des Drehgebers.

4. Drehgeber nach einem der vorstehenden Ansprüche, **dadurch gekennzeichnet,** daß die Aufnahmewelle (7) als Hohlwelle ausgeführt ist.

5. Drehgeber nach einem der vorstehenden Ansprüche 1 bis 3, **dadurch gekennzeichnet,** daß die Aufnahmewelle (7) als Vollwelle ausgeführt ist.
